# EUROPEAN PATENT APPLICATION

(11) **EP 0 588 010 A1**
(43) Date of publication of application: **23.03.1994**
(21) Application number: 93111207.2
(22) Date of filing: 13.07.1993
(51) Int. Cl.: A23L 3/015

(54) **A method of preparing and packing liquid food with extended shelf life using high pressure**

(30) Priority: 21.07.1992 SE 9202211
(71) Applicant: Tetra Laval Holdings & Finance SA, 1009 Pully (CH)
(72) Inventor: Nilsson, Bengt-Gunnar, S-240 17 Södra Sandby (SE)
(74) Representative: Müller, Hans-Jürgen, Dipl.-Ing.

(57) **Abstract**

The invention relates to a method of pressure treating a liqueform food so that its bacteria content is reduced and its shelf life extended. The food is enclosed in a first container with flexible wall material and is subjected to a pressure of between 1,000 and 16,000 kilograms per square centimeter during a time of less than 30 minutes. The thus long-life treated food is then transferred under aseptic conditions to smaller consumer packages for distribution.

## Description

### TECHNICAL FIELD

The present invention relates to a method of treating and packing liquid food with extended shelf life, the primary purpose being to provide consumer packages with liquid food which has been treated and thereby given long shelf life. Thus, for instance milk which has been treated and, in certain cases sterilized and packed under aseptic conditions, can be stored for many months without refrigeration, without the milk turning sour. The reason for this is that the normal bacteria flora in the milk has been reduced or wholly exterminated by a special treatment, for which reason bacterial degradation of the milk does not take place or is at least delayed as long as the food is stored in its bacteria-tight package.

### BACKGROUND ART

One of the drawbacks inherent in prior art processes for sterilizing, for example, milk, juice, water or other liquid foods is that the food, during the sterilization treatment - which is effected by heating - suffers from a resultant deterioration in flavour, for example milk has a cooked taste. Vitamins and enzymes are also reduced by the extensive heat treatment which is required for long life treating milk, with the result that such a heat treatment is, under certain conditions, undesirable.

Different heat treatment processes have proved to give different results as regards influence on flavour, and the greatest influence on flavour is obtained when the product is heated for a lengthy period of time, while better results are obtained in so-called flash heating or UHT treatment which entails that the product, for example milk, is heated to a temperature of 140°C for a few seconds in order thereafter to be rapidly cooled. Juices need not be subjected to the same extensive heat treatment as milk in order to be sterilized or long life treated, it being sufficient to heat the juice to a temperature of between 90 and 100°C, but also in such treatment, vitamins and enzymes are destroyed. The conclusion will thus be that a heat treatment for purposes of sterilization or long life treatment is undesirable on occasions because of the negative effects which accompany the treatment. Consequently, other methods have been adopted such as, for example, sterile filtration, irradiation, etc. Irradiation with electron beams or particle irradiation have also proved to give undesired changes in the irradiated product and, for example sterile filtration is such a slow and expensive method that it can hardly be employed in sterilization of extremely small volumes.

However, it has proved that a liquid which is subjected to great pressure for a sufficient length of time becomes sterile. The preconditions for sterilization or long life treatment by means of pressure are different for different types of liquids, depending upon their composition, original bacteria content, etc. but a treatment in which pressure and treatment time have been adapted in accordance with the preconditions of the treated liquid makes it possible to sterilize or long life treat liquids by means of pressure without, to that end, influencing the flavour, vitamin content etc. of the liquid.

Since pressure treatment is more expensive to carry out than heat treatment, it is not practically and economically viable to apply the method to all types of individual consumer packages, but one economically defensible method is to treat a large quantity of liquid food which is enclosed in a first, bacteria-tight sealed container and that the larger container is subjected to a pressure treatment of such scope that the contents will be bacterial-reduced. The contents in this large, first container may thereafter be transferred under aseptic conditions to smaller containers, e.g. consumer packages, if such transfer takes place under aseptic conditions and the smaller packages or cartons have been sterilized beforehand.

### BRIEF DESCRIPTION OF THE ACCOMPANYING DRAWING

The present invention will now be described in greater detail hereinbelow, with particular reference to the accompanying schematic Drawing, on which:
Fig. 1 shows an apparatus for pressure treatment of liquid contents; and
Fig. 2 shows how the treated container is connected to a packaging machine and the contents in the container are transferred to consumer cartons or packages with sterile contents.

### DESCRIPTION OF PREFERRED EMBODIMENT

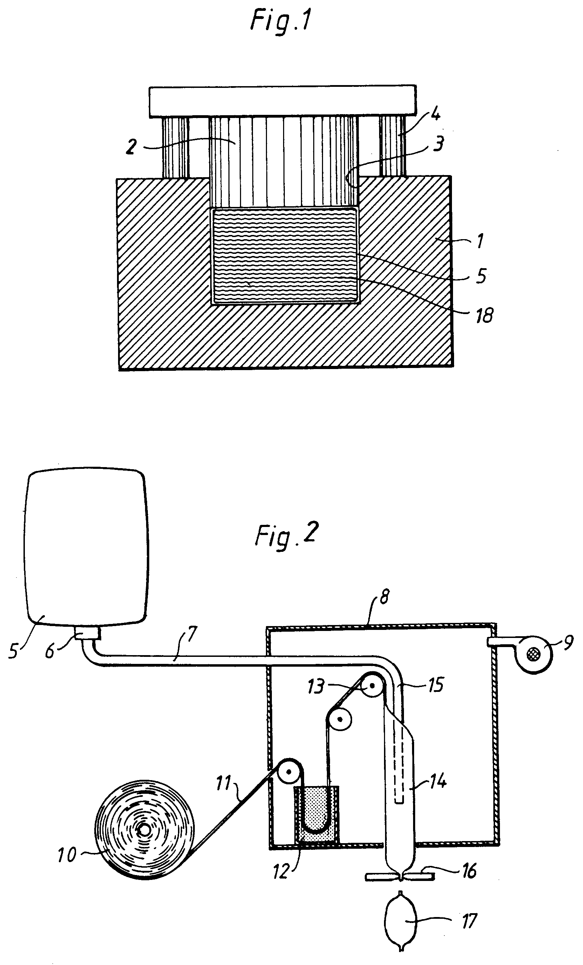

Fig. 1 shows a press intended to create large static pressure. As such, there are numerous different designs and constructions of presses of this type, for example one press is marketed under the brand name QUINTUS which can deliver pressure of up to and above 16,000 kilograms per square centimeter. For simplicity's sake, a hydraulic press is illustrated schematically in Fig. 1, with a base 1 and a movable ram portion 2 which is disposed to be inserted in a cylinder 3 in the base 1. The movable ram portion 2 is operated by means of traction rods 4 which are connected to hydraulic cylinders (not shown). In the cylinder space 3 of the base 1, there is inserted an aseptically sealed container 5 holding a liquid food, e.g. milk. The container 5 consists of a flexible outer casing which surrounds the liquid food, and the container 5 is sealed in a bacteria-tight manner. In the cylinder space 3, there is further a liquid 18 between the cylinder wall and the container 5.

When the container 5 has been inserted in the cylindrical space 3, the ram 2 is forced down in the cylindrical portion 3 of the base in such a manner that the liquid 18 and the container 5 are compressed, the pressure of the contents within the container 5 being increased. When the pressure is raised in the container 5, a destruction process is commenced of the microbiological flora in the enclosed liquid and, when the pressure is raised to a level of 1,000 - 16,000 kilograms per square centimeter, this destruction process is accelerated. Depending upon the nature and original bacteria content of the enclosed contents, the time during which the pressure is applied must be varied for different types of foods, but in order to achieve an economical treatment, the treatment time should be less than 30 minutes. The relationship between pressure and treatment time is difficult to express in general rules or formulae, but a process of trial and error should be applied to each type of liquid contents. We assume in the present case that a normal, pasteurized milk is treated with a pressure of 10,000 kilograms per square centimeter for five minutes and that this has proved to be sufficient for exactly that type of milk so as to achieve extended shelf life. The volume of the container 5 depends upon the size of the press and may vary anything from between a few score litres and up to 1,000 litres.

Fig. 2 shows how the treated container 5 is connected by means of an aseptic coupling valve 6 to a conduit 7 which has been interiorly sterilized beforehand. The conduit 7 extends into an aseptic chamber 8 whose interior has been pre-sterilized and in which a sterile atmosphere is maintained in that sterilized air is blown in by means of a fan 9 so that a slight excess pressure is maintained in the sterile chamber 8. From a magazine reel 10 of packaging material, a web 11 is paid out, the web optionally consisting of a plastic film or a paper web which is coated with plastic material. The web 11 is led into the sterile chamber 8 and down into a bath 12 containing a sterilizing liquid, for example hydrogen peroxide. After drying of the sterilized web using means not shown on the Drawing, the web 11 is led over an upper bending roller 13 and formed into a tube 14 in that the longitudinal edges of the web are united with one another and sealed to one another by means (not shown). The thus formed tube 14 which has a sterile interior is filled with sterile contents through the filler pipe 15 which is interconnected with the conduit 7. Gradually as new material web 11 is unreeled from the magazine reel 10, new tube 14 is formed which is progressively filled with contents from the storage container 5. At the same time, the lower region of the tube is sealed off by means of sealing jaws 16 in sealing seams or joints at right angles to the longitudinal axis of the tube 14 and, once the lower region of the tube has been separated in the sealing region, individual packaging containers 17 are formed which, in this case, are in the form of bags or cushions, but which, if the packaging material is rigid, may be shaped into cartons or packages with a determined geometric configuration.

When the storage container 5 of sterilized contents has been emptied, the aseptic valve 6 is closed, whereafter the empty container 5 is removed and a new container 5 filled with sterilized contents is connected to the sterile valve 6.

If it is not the intention to make a break in production for changing the container 5, it is possible instead to insert a permanent storage container, for example of stainless steel, which, with the aid of a sterile valve 6, is filled from containers 5 which, in the manner described in the foregoing, are treated by means of pressure so as to sterilize their liquid contents. A presentation is given below of the results achieved on treatment of liquid foods in a high pressure press of the type mentioned herein.

### Example I

In this Example, freshly pressed orange juice was treated in a high pressure press for 10 minutes at a pressure of 8,000 kg/cm². In the example, untreated juice is compared with treated and those properties which are assessed are colour, flavour, presence of yeast, mould and spores, as well as enzyme activity and vitamin C content.

| **EXAMPLE I TEST WITH FRESHLY PRESSED ORANGE JUICE TREATED IN HIGH PRESSURE PRESS TO 8KBAR, STAY TIME 10 MIN.** | | | |
|---|---|---|---|
| **PROPERTY** | **TREATED** | **UNTREATED** | |
| | | After days | |
| | | 1 | 30 |
| | | room temperature | |
| COLOUR | - | unchanged | unchanged¹ |
| FLAVOUR | - | unchanged | unchanged¹ |
| YEAST cfu/mL | 1400 | nd | nd |
| MOULD cfu/mL | 1600 | nd | nd |
| SPORES (Bacillus) cfu/mL | d | nd | d |
| ENZYME ACTIVITY PEU/Bx | 1,4x10⁻⁴ | 0,1x10⁻⁴ | na |
| VITAMIN C mg/100mL | 50 | 50 | 50 |

| | | | |
|---|---|---|---|
| 1) compared with deep frozen stored untreated juice 2) na = not analyzed 3) nd = not detectable 4) d = detectable | | | |

### Example II

In this example, a microbiological analysis of freshly pressed orange juice is conducted before and after treatment in a high pressure press.

| **EXAMPLE II MICROBIOLOGICAL ANALYSIS OF FRESHLY PRESSED ORANGE JUICE BEFORE AND AFTER TREATMENT IN HIGH PRESSURE PRESS. UNIT cfu/mL** | | | | | |
|---|---|---|---|---|---|
| **TREATMENT PRESSURE kbar** | **TIME min** | **YEAST** | **MOULD** | **TOTAL NO.** | **YEAST** **1)** |
| 0 | 0 | 1400 | 1600 | 6000 | na |
| 4 | 0 | 850 | 12 | 900 | 73000 |
| 4 | 10 | nd | nd | nd | nd |
| 6 | 0 | nd | nd | nd | 35 |
| 6 | 10 | nd | nd | nd | nd |
| 8 | 0 | nd | nd | nd | nd |
| 8 | 10 | nd | nd | nd | nd |

| | | | | | |
|---|---|---|---|---|---|
| 1) = after 30 days' storage at room temperature 2) na = not analyzed 3) nd = not detectable | | | | | |

As is apparent from Table II, there will be obtained, at a pressure exceeding 6,000 kg/cm², complete destruction of yeast and mould.

Example III accounts for vitamin C content in freshly pressed orange juice before and after the treatment in a high pressure press.

| **EXAMPLE III VITAMIN C IN FRESHLY PRESSED ORANGE JUICE BEFORE AND AFTER TREATMENT IN HIGH PRESSURE PRESS** | | | | |
|---|---|---|---|---|
| **TREATMENT PRESSURE kbar** | **TIME min** | **AFTER 1 DAY** | **AFTER 30 DAYS room temp.** | **AFTER 30 DAYS refrigeration** |
| 0 | 0 | 47 | - | - |
| 4 | 0 | 45 | 46 | 46 |
| 4 | 10 | 47 | 42 | 43 |
| 6 | 0 | 46 | 42 | 42 |
| 6 | 10 | 45 | 43 | 44 |
| 8 | 0 | 56 | 46 | 50 |
| 8 | 10 | 63 | 60 | 50 |
| Note: measurement accuracy ±10% variation in raw materials. | | | | |

It is conceivable, without departing from the spirit and scope of the inventive concept as herein disclosed, to employ other means than those described here for transferring the contents in the first container 5 to the second, smaller consumer container 17. One method to be employed is co-called cannula filling, i.e. the first container 5 is connected via a hose to a cannula which is inserted into a packaging container interiorly sterilized beforehand which, after filling, is sealed beneath the discharge aperture of the cannula. In this case, the above-mentioned second containers 17 are not filled up to a level which includes the aperture of the cannula, but the packaging container is sealed off above the level of the contents but below the mouth of the cannula. In such a case, the risk of infection of the sterilized food is avoided.

It is also conceivable first to produce consumer packages with flexible packaging walls and directly feed these into the high pressure press for pressure treatment. However, the result of such a procedure will be less favourable, since the interiors of the individual packages are not aseptically treated.

The primary concept of the present invention is, thus, to treat a liquid food by means of pressure for a given time in a first, large container 5, while the food is enclosed in the container and then, after the long life treatment, to transfer the treated food to smaller consumer packages 17. Examples have been cited of how the pressure treatment may be reduced into practice and how the treated food in the first container 5 may be transferred to smaller consumer containers 17 without bacteria being able to gain access to the system and, within the spirit and scope of the inventive concept as herein disclosed, it is also naturally possible to employ other types of presses or pressure devices than those schematically illustrated. Similarly, it also possible to employ other secondary packages 17, i.e. the above-mentioned second packages 17. For example, these may consist of a blown plastic hose which, in the blowing operation, has a sterile interior, the plastic hose being, after production, sealed either with a content of sterilized air or gas, or flattened without any air or gas filling. Such packages may advantageously be employed for cannula filling. It is also possible to provide packages of plastic tube or plastic bag type with a welded-on valve through which filling may be effected under aseptic conditions. The advantage afforded by the method according to the present invention is that it is possible, for a reasonable economic outlay, to sterilize a liquid food by means of pressure for distribution in smaller consumer packages, which has not hitherto been possible.

The present invention should not be considered as restricted to that described above and shown on the Drawing, many modifications being conceivable without departing from the spirit and scope of the appended Claims.

## Claims

1. A method of preparing and packing liquid foods with extended shelf life, **characterized in that** a liqueform food is introduced into a first flexible container; **and that** said first container is sealed in a liquid and bacteria-tight manner and subjected to a pressure exceeding 1,000 atm. for a period of less than 30 minutes for the purpose of treating the liqueform food so that its bacteria content is reduced and its shelf life extended.

2. The method as claimed in Claim 1, **characterized in that** the treated food is transferred under aseptic conditions from said first container to a plurality of second containers which, after the filling operation, are sealed in a bacteria-tight manner.

3. The method as claimed in Claim 1, **characterized in that** the pressure to which said first container is subjected is between 1,000 and 16,000 atm.

4. The method as claimed in Claim 2, **characterized in that** said first container is connected to an aseptic packaging machine in which a pre-sterilized web of flexible packaging material is formed into a tube in that the edges of the web are tightly united with one another; **and that** the treated liqueform food in the first container is transferred to said tube which, under repeated transverse sealings transversely of the longitudinal axis of the tube, is divided into sealed packaging units containing treated food, the packaging units being, by means of incisions in said transverse sealings, separated from the tube.

5. The method as claimed in Claim 4, **characterized in that** there is disposed, between said first container and said packaging machine, an aseptic valve by means of which said first container may be connected to and disconnected from the packaging machine without the aseptic conditions being broken either in the first container or in the packaging machine.

6. The method as claimed in Claim 2, **characterized in that** said second containers are filled by means of a cannula connected to said first container, said cannula being disposed to be insertable through the packaging wall in said second containers, these being filled with treated food through the cannula, whereafter said second containers are sealed beneath the discharge opening of the cannula.
